# EUROPEAN PATENT APPLICATION

(11) **EP 0 692 658 A1**
(43) Date of publication of application: **17.01.1996**
(21) Application number: 95110990.9
(22) Date of filing: 13.07.1995
(51) Int. Cl.: F16H 61/28

(54) **A gear shift remote servo-control for motor vehicles**

(30) Priority: 15.07.1994 IT TO940573
(71) Applicant: FIAT AUTO S.p.A., I-10135 Torino (IT)
(72) Inventor: Falcetto, Paolo, I-13062 Candelo (BI) (IT)
(74) Representative: Lotti, Giorgio

(57) **Abstract**

An automobile gear shift remote control, particularly of the kind employing two Bowden cables (3, 4) or two rods (31, 32) or one rod and one cable, one for transmitting gear select motion and the other for transmitting gear shift motion, from the shift lever (1) to the axles of a gearbox (6) located in the motor compartment. Mounted in series to the cable (4) or the lever (32) transmitting gear shift motion is a servo-actuator device (9, 34) which reduces the effort required for gear shifting.

## Description

The present invention generally refers to a gear shift remote servo-control for a motor vehicle. More particularly, the invention relates to such a control of the kind employing two Bowden cables or two rigid rods or a rigid rod and a Bowden cable.

Cables or rods of devices of known kind are attached on one side to a shift lever through known levers and on the other side to the gear select and shift axles provided in the gearbox.

The shift lever is manipulated so as to move along two perpendicular directions, one for reaching a gear select position, and one for reaching a gear shift position.

It is an object of the present invention to provide a device capable of reducing the effort required to select and shift the gears.

This object is accomplished by the provision of an automobile gear shift remote control, of the kind employing two Bowden cables or two rods or one rod and one cable, one for transmitting gear select motion and the other for transmitting gear shift motion, from the shift lever to the axles of a gearbox located in the motor compartment, characterized in that mounted in series to the cable or the lever transmitting gear shift motion is a servo-actuator device for reducing the effort required for gear shifting.

In order that the present invention may be well understood there will now be described a few preferred embodiments thereof, given by way of example, reference being made to the accompanying drawings, in which:
- FIG. 1: is a view of an embodiment of the device of the present invention mounted to a gear shift remote control composed of two Bowden cables;
- FIG. 2: is a schematic sectional view of the device of FIG. 1 in a rest position;
- FIG. 3: is a view of a second embodiment of the device of the present invention mounted to a rod-type of gear shift; and
- FIG. 4: is a schematic section view of the device of FIG. 3 in a rest position.

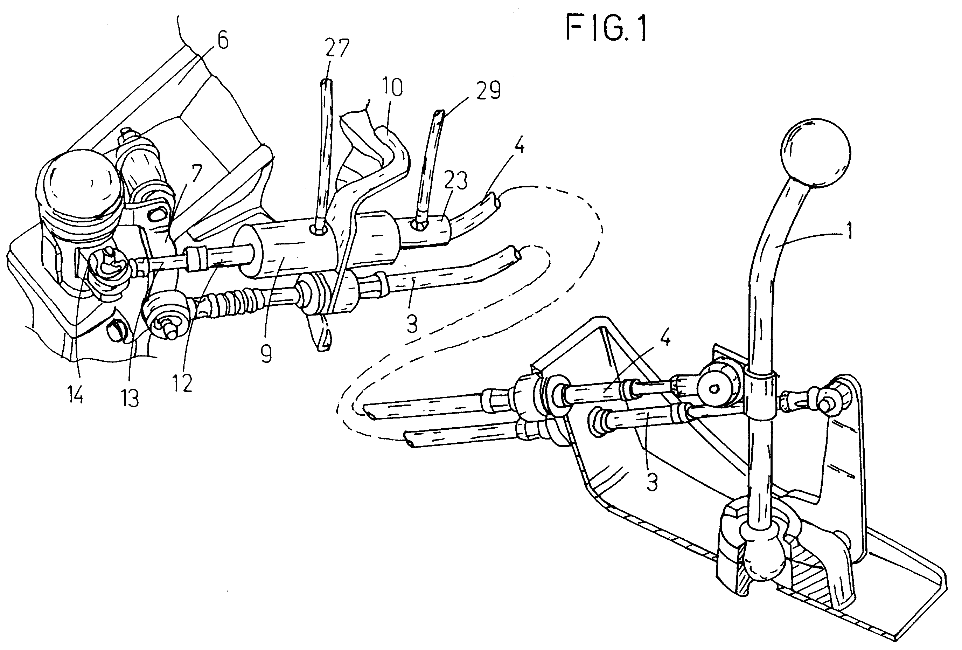

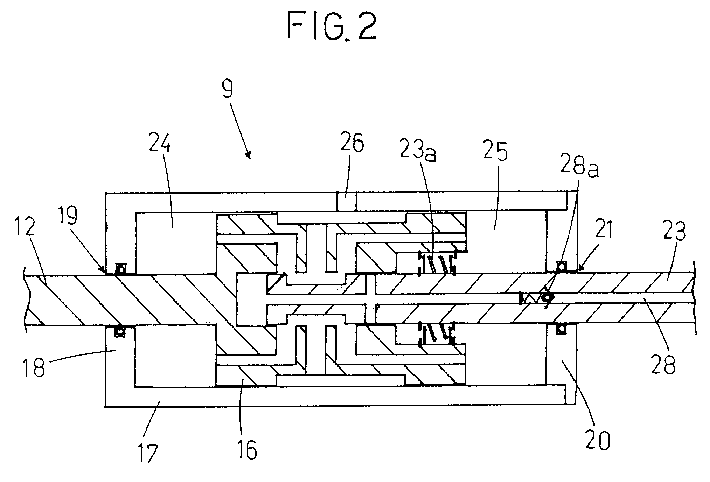

With reference to the attached FIGS. 1 and 2, numeral 1 designates the shift lever for remotely controlling an automobile gearbox of the type employing two Bowden cables 3 and 4 to select and shift a transmission gear ratio of gearbox 6, generally fitted in the motor compartment.

Cable 3 for transmitting gear select motion is normally connected to the corresponding lever 7 on gearbox 6, A servo-actuator 9 is interposed in series on cable 4 for transmitting gear select motion. Servo-actuator 9 is supported by a bracket 10 anchored to the housing 11 of gearbox 6. A rod 12 extending out of servo-actuator 9 connects through an arm 13 to a gear select lever 14 of gearbox 6.

Referring particularly to FIG. 2, as shown, rod 12 is part of servo-actuator 9, which is also composed of a distributor piston 16 inserted within a cylinder 17. Cylinder 17 is closed on one side 18 except for a through hole 19 letting rod 12 out, and is provided with a cap 20 on the opposite end also having a through hole 21.

Inserted in through hole 21 is the end of a piston 23 co-operating with the distributor 16 to bring either of two chambers 24, 25 to atmospheric pressure. Chambers 24, 25 are defined by the opposite ends of distributor piston 16, the walls of cylinder 17 and cap 20. The vacuum that always occurs within cylinder 17 when the engine is running, is provided within cylinder 17 by means of a radial central bore 26 and a duct 27 communicating with the air inlet manifold (not shown) of the engine. Atmospheric air is introduced in cylinder through an axial bore 28 controlled by a non-return valve 28a. Bore 28 is obtained in plunger 23 and connected through a duct 29 to a filter (not shown).

Following displacement of plunger 23 through cable 4, atmospheric pressure in one of the two chambers 24 or 25 causes translation in the opposite way of distributor piston 16 and of rod 12 which operates lever 14 through arm 13, thereby shifting the desired gear on or off. Return of plunger 23 to its neutral position is guaranteed by the biasing force of a spring 23a.

As apparent, the servo-controlled device of the above discussed embodiment may be replaced without inconveniences, for example by a pressurised fluid device.

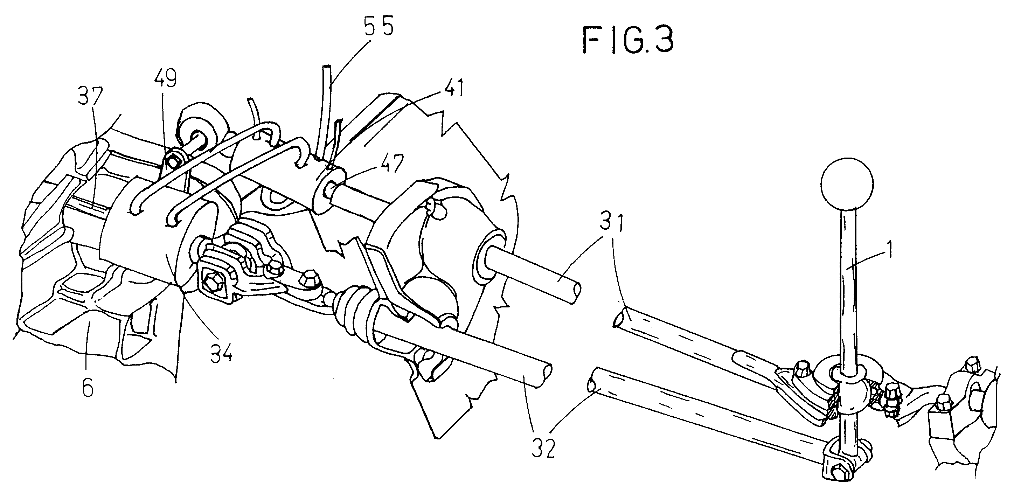

FIG. 3 illustrates a gear shift remote control wherein the shift lever 1 and the gear select and shift levers of gearbox 6 are connected by two rigid rods, a resisting rod 31 and a gear select rod 32. According to the invention, mounted to gear select rod 34 is a servo-actuator 34 driven by a distributor 41 which is mounted in series to resisting rod 31.

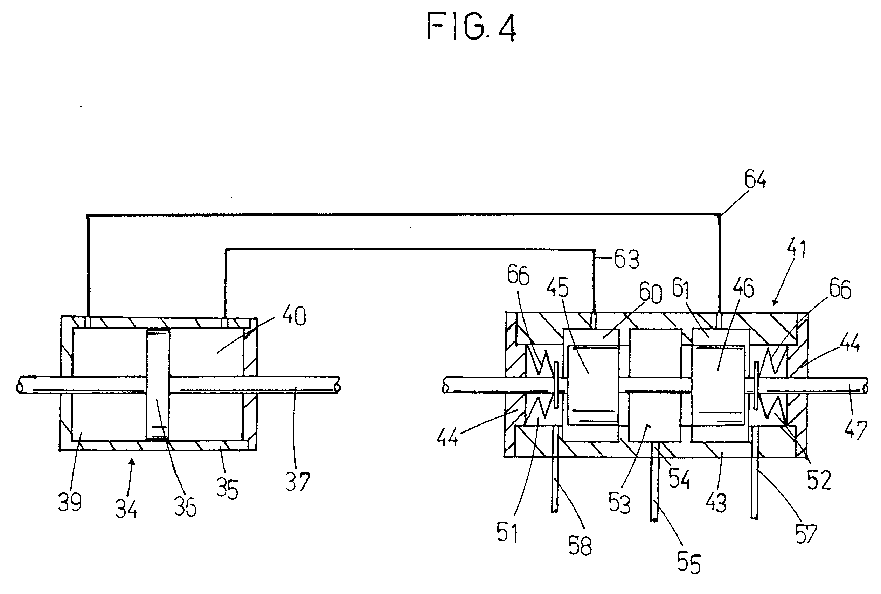

Referring to FIG. 4, servo-actuator 34 consists of a cylinder 35 in which there is located a plunger 36 securely attached to a rod 37 extending out of cylinder 37 and defining therein two separate chambers 39 and 40. One of the ends of rod 37 is connected in known manner to the gear select rod 32, while the other end is connected to the shift lever (not shown). The servo-actuator is driven by a distributor 41 consisting of a hollow cylinder 43 the ends of which are closed by caps 44. Located within hollow cylinder 43 are two plungers 45, 46 integral with a rod 47 having one end attached to rod 31 and the other end attached to a contrasting lever 49 fitted on the gearbox 6.

The distributor 41, as known to those skilled in the art, provides two side chambers 51, 52 and a central chamber 53. The latter communicates with the air inlet manifold (not shown) of the engine through a radial port 54 and a conduit 55. The two side chambers 51, 52 are connected to the atmosphere through conduits 57 and 58, to said chambers 39, 40 of actuator 34 through two intermediate chambers 60, 61 controlled by plungers 45, 46, and two conduits 63, 64 by corresponding radial bores in the walls of cylinders 35 and 43.

As apparent, displacement of plungers 45 and 46 in either way caused by the resisting force effected by rod 31 on shift lever 1 at the moment of gear selection puts one of the two chambers 39, 40 of actuator 34 in a vacuum condition following commutation of distributor 41. Particularly, translation of the plungers 45 and 46, according to the direction of displacement, results in one of the two intermediate chambers 60, 61 (and also the corresponding chamber 39 or 40) communicating with the vacuum existing in central chamber 53, while closing the port corresponding to chambers 51 or 52 at atmospheric pressure.

In this way servo-action is accomplished in displacing rod 32 so as to allow to reduce the effort to be exerted to perform gear selection. Springs 66 provide return of plungers 45, 46 to neutral position.

Similarly to the first embodiment, another type of servo-actuator means may be used without departing from the scope of the present invention.

## Claims

1. An automobile gear shift remote control, of the kind employing two Bowden cables (3, 4) or two rods (31, 32) or one rod and one cable, one for transmitting gear select motion and the other for transmitting gear shift motion, from the shift lever (1) to the axles of a gearbox (6) located in the motor compartment,
characterized in that mounted in series to the cable (4) or the lever (32) transmitting gear shift motion is a servo-actuator device (9, 34) for reducing the effort required for gear shifting.

2. A gear shift remote control according to claim 1, characterized in that the servo-actuator device (9, 34) is a vacuum-operated pneumatic device.

3. A gear shift remote control according to claim 1, characterized in that the servo-actuator device (9, 34) is a pressure operated hydraulic device.

4. A gear shift remote control according to claim 1, characterized in that the servo-actuator device (9) of the cable (3, 4) control is composed of a closed cylinder (17) wherein a vacuum distributor piston (16) is located, said distributor piston being connected to the shift lever (14) through a control rod (12) extending out of said cylinder (17); and that said distributor piston (16) being driven by a plunger (23) connected to the gear shift cable (4) to translate said piston in response to vacuum within cylinder (17) for actuating gear selection and shifting through said rod (12).

5. A gear shift remote control according to claim 1, characterized in that said servo-actuator device (34) of the rod (31, 32) control is composed of a closed cylinder (35) containing a plunger (36) for translating within said cylinder and connected on one side to the gear shift lever through a rod (37) and on the other side to the gear shift rod (32); said plunger being moved by vacuum controlled by a distributor (41) disposed in series on the resisting rod (31) of the gearbox (6).

6. A gear shift remote control according to claims 1 and 5, characterized in that said vacuum distributor (41) is adapted for delivering vacuum to said servo-actuator device in response to translating motion of said resisting rod (31).
